# EUROPEAN PATENT APPLICATION

(11) **EP 4 432 188 A1**
(43) Date of publication of application: **18.09.2024**
(21) Application number: 23180964.1
(22) Date of filing: 22.06.2023
(51) Int. Cl.: G06Q 10/20, G06N 3/0442

(54) **SYSTEMS, METHODS, AND STORAGE MEDIA FOR FORECASTING AIRCRAFT OPERATION DATA**

(30) Priority: 17.03.2023 IN 202311018133
(71) Applicant: General Electric Company, Schenectady, NY 12345 (US)
(72) Inventor: GOPALAKRISHNAN, Sadhana, 560066 Bengaluru (IN); GANDHI, Vivek, 560066 Bengaluru (IN); SEKAR, Jayanth, 560066 Bengaluru (IN)
(74) Representative: Openshaw & Co.

(57) **Abstract**

A method of forecasting operation data of an aircraft includes receiving, by a computer system, historical flight data (104) of the aircraft, the historical flight data (104) including historical departure and arrival airports, and historical period of flight occurrence, calculating a transition probability matrix (106) based on the historical flight data (104), determining, based on the transition probability (106), using a hidden Markov model (HMM) (108), forecasted arrival airports, and time of arrival of the aircraft to the arrival airports to build a forecasted sequence of future routes (110), receiving, past aircraft sensor parameters (115), calculating, using a bootstrapping procedure (114) based on the past aircraft sensor parameters (115) and the forecasted sequence of future routes (110), forecast future aircraft operational data (116), and determining, based on the forecast future aircraft operational data (116), a maintenance schedule of one or more systems of the aircraft to prevent failure of the one or more system.

## Description

### TECHNICAL FIELD

The present disclosure relates generally to utilizing aircraft-related data and, in particular, to a method of utilizing forecasted operational data.

### BACKGROUND

Some components in aircraft engines have a limited lifetime and may require periodic servicing prior to failure. Therefore, accurate prediction and forecasting of possible failures can improve the reliability of aircraft components and systems.

### BRIEF DESCRIPTION OF THE DRAWINGS

The foregoing and other features and advantages will be apparent from the following, more particular, description of various exemplary embodiments, as illustrated in the accompanying drawings, wherein like reference numbers generally indicate identical, functionally similar, and/or structurally similar elements.
FIG. 1 is a first portion of a flow chart of a method of forecasting aircraft operational data, according to an embodiment of the present disclosure.
FIG. 2 is a diagram of an example of data routes used by an aircraft and an example of transition probability matrix determined based on the data routes used by the aircraft, according to an embodiment of the present disclosure.
FIG. 3 is a second portion of the flow chart of the method of forecasting aircraft operational data, according to an embodiment of the present disclosure.
FIG. 4 shows a flow chart for implementing a bootstrapping procedure, according to an embodiment of the present disclosure.
FIG. 5A is a plot of engine model cumulative damage versus a number of cycles of a specific engine (e.g., ESN1), according to an embodiment of the present disclosure.
FIG. 5B is another plot of engine model cumulative damage versus a number of cycles of a specific engine (e.g., ESN1), according to an embodiment of the present disclosure.
FIG. 6 is a plot of density versus error in cycles, according to an embodiment of the present disclosure.
FIG. 7 is a flow chart of a method using a Hidden Markov Model (HMM), according to an embodiment of the present disclosure.
FIG. 8 is a flow chart of another method using the HMM, according to another embodiment of the present disclosure.
FIG. 9 is a schematic diagram of a computer system for implementing the programs or the methods of forecasting operation data of an aircraft using a HMM, according to an embodiment of the present disclosure.
FIG. 10 is a flow diagram of a method of forecasting operation data of an aircraft using a deep learning sequential Long Short Term Memory (LSTM) procedure, according to another embodiment of the present disclosure.
FIG. 11 is a flow diagram of a method of forecasting operation data of an aircraft using deep learning, according to another embodiment of the present disclosure.
FIG. 12 is a flow diagram of a method of forecasting operation data of an aircraft using a HMM and a Probabilistic Regression Forecast Method (PRFM), according to yet another embodiment of the present disclosure.
FIG. 13 is a flow diagram of a method of forecasting operation data of an aircraft using a Gas Path Tracking Filter (GPTF), according to another embodiment of the present disclosure.

### DETAILED DESCRIPTION

Additional features, advantages, and embodiments of the present disclosure are set forth or apparent from a consideration of the following detailed description, drawings, and claims. Moreover, both the foregoing summary of the present disclosure and the following detailed description are exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the spirit and the scope of the present disclosure.

The accurate prediction or forecasting of failure of components, or damage progression in the aircraft engines can improve scheduling of a maintenance operation to prevent the failure of components or to replace used components prior to failure. The accurate prediction or forecasting of failure or damage progression of components in the aircraft engine can hence translate to various benefits in terms of fleet management and removal prioritization, and, ultimately, help to maintain overall aircraft engine inventory availability.

Embodiments of the present disclosure seek to provide a method of forecasting aircraft operational data that includes forecasting aircraft sensor parameters based on aircraft route structure that maintains non-linearity and seasonality. The method includes using a Hidden Markov Model (HMM) for forecasting the route structure based on historical behavior of the aircraft. The method further includes using a bootstrapping (BS) procedure to forecast sensor parameters (e.g., engine sensor parameters). The method takes as input aircraft operational data of an aircraft and outputs future operational data of the aircraft. The HMM, when implemented on a computer system, builds a transition probability matrix of the route structure using the historical data of the aircraft. The method uses the transition probability matrix to build a probabilistic forecast of the route structure. Based on the forecasted route structure, the bootstrapping procedure is used to pick a sensor record from the history of the aircraft for the same route in the same period to maintain operational conditions per route to forecast sensor parameters (e.g., to forecast engine sensor parameters). The forecasted sensor parameters can then be used, for example, in models to predict aircraft engine removals for shop visit/maintenance activities.

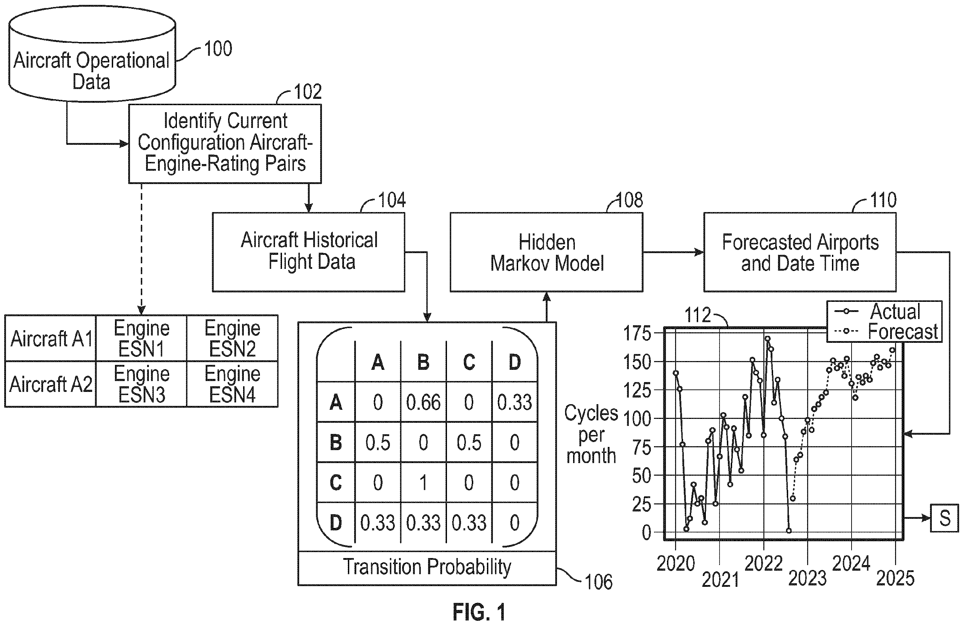

FIG. 1 is a first portion of a flow chart of a method of forecasting aircraft operational data, according to an embodiment of the present disclosure. The method includes receiving the aircraft operational data 100. The aircraft operational data includes aircraft sensor parameters based on the route structure of the aircraft. The operational data includes day-to-day flight data and recorded sensor information that captures various operational and environmental parameters of the aircraft in three phases, e.g., takeoff, climb, and cruise. The aircraft operational data is used to train an algorithm and to capture a trend and seasonality of each aircraft over the history. The method includes identifying the aircraft-engine configuration 102, or the current one or more engines associated with the aircraft. For example, the aircraft-engine configuration 102 may include associating engines ESN1 and ESN2 with aircraft A1 and associating engines ESN3 and ESN4 with aircraft A2. The method includes receiving historical flight data 104 of the aircraft including the aircraft route and the period of flight occurrence (for example, quarterly). The method includes calculating a transition probability matrix 106 based on the historical flight data. For example, a pattern of departure airports and arrival airports used by the aircraft is captured in the form of a transition probability matrix 106, where the transition probability of moving from one airport to another is captured in four matrices, each computed for a selected period of time (e.g., each quarter for four quarters) during a one-year period. However, the transition probability matrix 106 can also be computed and captured in a plurality of matrices (e.g., twelve matrices), each computed for one month during a one-year period, for example.

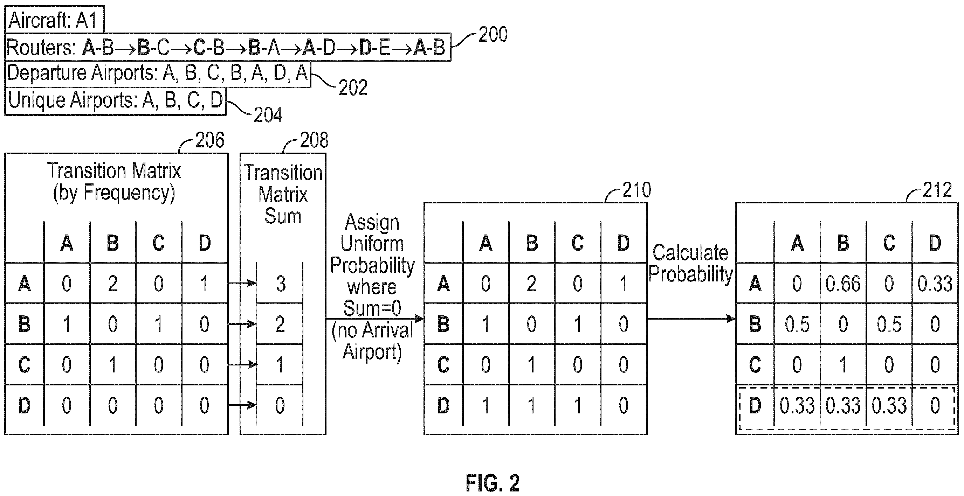

FIG. 2 is a diagram of an example of data routes used by an aircraft and an example of a transition probability matrix determined based on the data routes used by the aircraft, according to an embodiment. For example, an aircraft A1 takes the following route and flies from departure airport A to arrival airport B. The same aircraft A1 then uses airport B as its new departure airport to land in new arrival airport C. The aircraft then uses airport C as its new departure airport to land back in arrival airport B. The routes of the aircraft A1 are shown at box 200. The bolded letters correspond to the departure airports for the routes taken by the aircraft A1, in this instance. Therefore, the departure airports are listed, at box 202, as follows: A, B, C, B, A, D, and A. The unique departure airports are identified, at box 204, as being, A, B, C, D.

Using the routes taken by the aircraft A1, a transition matrix 206 (by route frequency) is constructed. For example, the route A to D is taken by the aircraft A1 only one time. Therefore, the matrix element corresponding to the route A to D is one. For example, the route A to B is taken by the aircraft A1 two times. Therefore, the matrix element corresponding to the route A to B is two. This is repeated until all elements of the transition matrix in route frequency are determined. The diagonal elements on the transition matrix are zero because there are no flights from one departure airport (for example, A) to the same arrival airport (for example, A). Following the construction of the transition matrix (by route frequency), the transition matrix sum 208 is determined by summing the elements of the matrix at each row. For example, for the first row of the matrix, the sum is calculated by adding "0, 2, 0, and 1" to obtain "3". This means that the airport A is used three times as a departure airport. For the second row of the matrix, the sum is calculated by adding "1, 0, 1, and 0" to obtain "2," etc. This means that airport B is used twice as a departure airport.

Because a departure from airport D does not have any associated arrival airport from the selected list A, B or C, and is only associated with arrival airport E which is not listed in the possible departure airports, a uniform transition probability (transition probability equal to one) is assigned to airport D. This means that an aircraft departing from airport D can land at arrival airport A, B or C. As a result, following the construction of the transition matrix 206, a transformed matrix 210 is constructed based on the transition matrix 206. Elements of the transformed matrix 210 corresponding to departure airports A, B, and C are the same as the elements of the transition matrix 206 corresponding to departure airports A, B, and C. However, for the departure airport D, the elements associated with arrival airports A, B, and C, which were previously equal to zero within the transition matrix 206, are now set to one for the transformed matrix 210. Therefore, the routes not seen in the aircraft history (D to A, D to B, and D to C) are taken into account in the transformed matrix 210. The route D to E in the aircraft history is ignored.

Following the construction of the transformed matrix 210, a transition probability matrix 212 is calculated based on the elements of the transformed matrix 210 by dividing each element by the sum of elements in each row. For example, for the row "D" in the transition probability matrix 212, the first transition probability element is equal to one divided by the sum equal to three (e.g., 1 + 1 + 1 +0). Therefore, the first transition probability element for row "D" is equal to 0.33. The second transition probability element and the third transition probability element in row "D" are also equal to 0.33. For example, for the row "A" in the transition probability matrix 212, the second transition probability element is equal to two divided by the sum equal to three (e.g., 0+2+0+1). Therefore, the second transition probability element for row "A" is equal to 0.66. A similar calculation is repeated for all elements of the transformed matrix 210 to obtain the transition probability elements of the transition probability matrix 212. Therefore, the elements of the transition probability matrix are calculated or computed based on elements of the matrix representing a frequency of usage of departure airports of the aircraft.

Referring back to FIG. 1, in an embodiment, the transition probability matrix 106 calculated based on the historical flight data may correspond to, for example, the transition probability matrix 212 shown in FIG. 2. Therefore, in an embodiment, the method includes inputting the transition probability matrix 212 into a HMM 108. The method includes determining forecasted departure airports, forecasted arrival airports and time of arrival of the aircraft to the arrival airports to build a forecasted sequence of future route structure 110. In an embodiment, the routes including the historical flight data and the forecasted sequence of future routes are placed or arranged in a time sequence 112 that maintains the utilization of the aircraft in the future. The time sequence 112 can be plotted as a graph in which the Y-axis or the vertical axis represents the number of cycles of flight per month and the X-axis or the horizontal axis represents the timeline or period. For example, the timeline or period selected can be one year, two years, three years, ..., five years (from the first point to the last point). The solid line in the time sequence 112 represents the real or historical flight data for a specific aircraft (for example, aircraft A1). The effect of COVID-19 on the number of flights is shown in the solid line where the number of flights per month decreased drastically towards the beginning of the selected period of time (for example, year "2020") and then slowly increased afterwards. The historical flight data (for example, from year "2020" to year "2022") is then used in the HMM 108, to forecast the flight data for the same aircraft (for example, aircraft A1) for the next future period of time (from year "2023" to year "2025"). The HMM 108 builds the next sequence of flight data for the same aircraft.

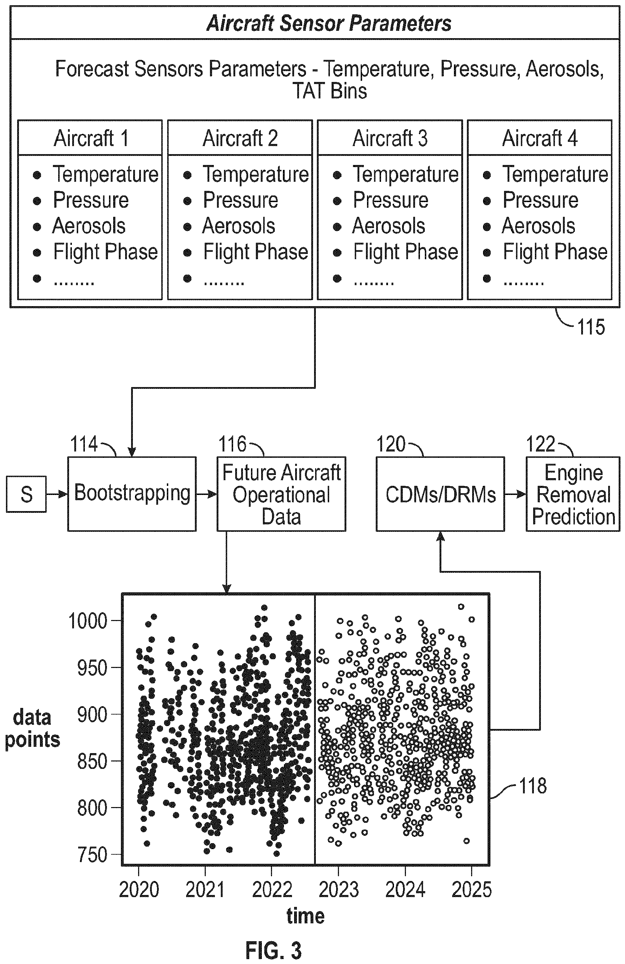

The method then progresses to the next steps "S" to implement a bootstrapping procedure 114. FIG. 3 is a second portion of the flow chart of the method of forecasting aircraft operational data, according to an embodiment of the present disclosure. The method includes receiving a series of aircraft sensor parameters 115 associated, for example, with the engine or engines (e.g., ESN1, ESN2) configuration used in the selected aircraft (e.g., aircraft A1). The method includes inputting the series of aircraft sensor parameters 115 associated, for example, with the engine or engines (e.g., ESN1, ESN2) configuration used in the selected aircraft (e.g., aircraft A1) and the time sequence 112 corresponding to the historical flight data and the flight forecast data previously obtained using the HMM 108 in the bootstrapping procedure 114. The aircraft sensor parameters 115 include, but are not limited to, temperature sensor parameters, pressure sensor parameters, aerosols sensor parameters, and Time At Temperature (TAT) bins. An engine in operation experiences range of temperatures. This range of temperatures is divided into various small segments. These segments are called bins. The time spent by engines in these bins can be used for various analysis. From the historical flight data 104, the departure airport, the arrival airport, and the date-time of flight departure of a given aircraft (e.g., aircraft A1) are available, and are associated with one or more engines (e.g., ESN1, ESN2) of the aircraft (e.g., aircraft A1).

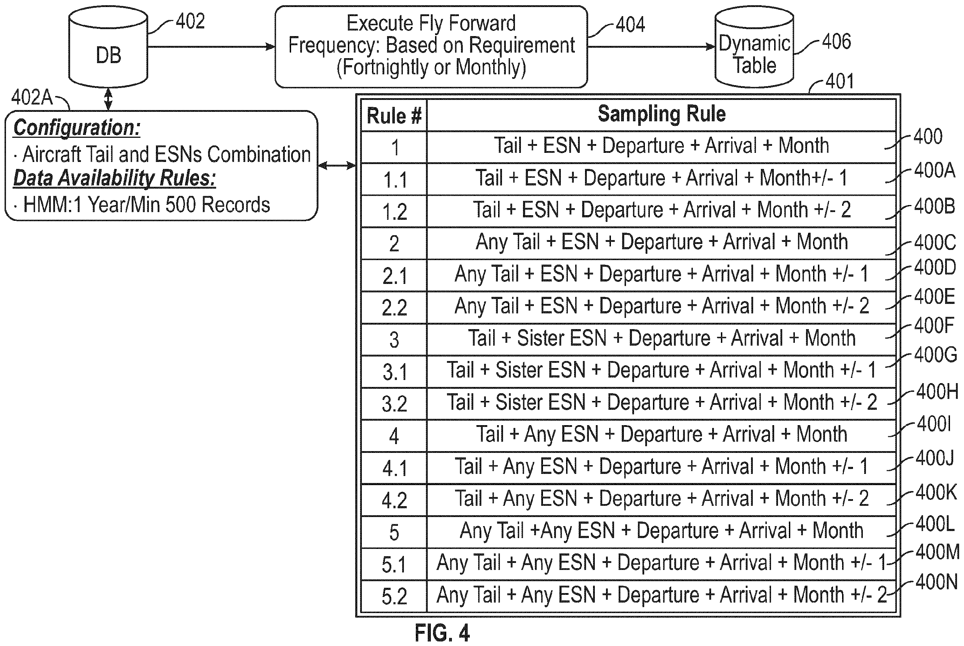

FIG. 4 shows a flow chart for implementing the bootstrapping procedure 114, according to an embodiment of the present disclosure. A string of five parameters 400 is available for the bootstrapping procedure 114. The bootstrapping procedure 114 uses the string of five parameters 400. The string of five parameters 400 are the aircraft identifier (e.g., aircraft A1), the engine on the aircraft (e.g., ESN1, ESN2), the departure airport, the arrival airport, and the date-time of flight departure (e.g., month of flight departure). The date-time of flight departure can also be referred to as time of flight departure. The string of five parameters is stored in a database storage unit 402. The database storage unit 402 may contain a plurality of records including combinations of configurations (e.g., aircraft identifiers such as aircraft A1, aircraft A2, and engine identifiers such as ESN1, ESN2, etc.) and string sets of parameters (departure airport, arrival airport and time of flight departure) 402A. The database storage unit 402 may contain a plurality of such records (e.g., five hundred records).

To forecast, for example, engine data for engine (ESN1) used on the aircraft A1, the bootstrapping procedure 114 applies sampling rules 401 to the historical flight data stored in the database storage unit 402. For example, to forecast engine data for engine (ESN1) used on the aircraft A1, the bootstrapping procedure 114, searches the database storage unit 402 for the record having the string of five parameters, namely, the aircraft identifier (e.g., aircraft A1), the engine on the aircraft identifier (e.g., ESN1 and/or ESN2), the departure airport, the arrival airport, and the time of flight departure (e.g., month of flight departure). If the bootstrapping procedure 114 finds at least one record (for example, ten records may be found) having the specific string of five parameters, namely the aircraft identifier (e.g., aircraft A1), the engine on the aircraft identifier (e.g., ESN1, ESN2), the departure airport, the arrival airport, and the time of flight departure (e.g., month of flight departure), the bootstrapping procedure associates historical aircraft flight data with the found record and can then forecast the future aircraft operational data including future engine parameters.

If the bootstrapping procedure 114 does not find the record having the specific string of five parameters, namely the aircraft identifier (e.g., aircraft A1), the engine on the aircraft identifier (e.g., ESN1, ESN2), the departure airport, the arrival airport, and the time of flight departure (e.g., month of departure), the bootstrapping procedure 114 searches the database storage unit 402 for a record containing a string of five parameters including the aircraft identifier (e.g., aircraft A1), the engine on the aircraft identifier (e.g., ESN1, ESN2), the departure airport, the arrival airport, and a contiguous time of flight departure (e.g., month of departure +/-1), at block 400A. For example, if the initially searched month of flight departure is February, the bootstrapping procedure 114 adds or subtracts one month, to search a record with the month of January or the month of March.

If no record is found with the specified time of flight departure with +/-1 month for the time of flight departure, the bootstrapping procedure 114 adds two months to or subtracts two months from the flight departure time, at block 400B, and again searches the database storage unit 402. If still no record is found with the modified time of flight departure, the bootstrapping procedure relaxes the requirement on the aircraft and searches a record having the string of five parameters with any aircraft identifier, the engine on the aircraft identifier (e.g., ESN1, ESN2), the departure airport, the arrival airport, and the time of flight departure (e.g., the month of departure), at block 400C. If still no record is found with the relaxed requirement on the aircraft, the bootstrapping procedure 114 searches the record having any aircraft identifier, the engine on the aircraft, the departure airport, the arrival airport, and the time of flight departure (e.g., the month of departure) shifted by one month (+/- one month), at block 400D. If still no record is found in the database storage unit 402, the same procedure can be repeated with the time of flight departure (e.g., the month of departure) shifted by two months (+/- two months), at block 400E. If still no record is found in the database storage unit 402, the same procedure can be repeated with the aircraft identifier, but with a sister engine (for example, instead of ESN1, ESN2 is searched), the departure airport, the arrival airport, and the month of flight departure, at block 400F. If still no record is found in the database storage unit 402, the same procedure can be repeated with the aircraft identifier but with a sister engine (for example, instead of ESN1, ESN2 is searched), the departure airport, the arrival airport, and the month of flight departure shifted by one month (e.g., +/- one month), at block 400G. If still no record is found in the database storage unit 402, the same procedure can be repeated with the aircraft identifier, but with a sister engine (for example, instead of ESN1, ESN2 is searched), the departure airport, the arrival airport, and the month of flight departure shifted by two months (e.g., +/- two months), at block 400H. If still no record is found in the database storage unit 402, the same procedure can be repeated with the aircraft identifier, but with any engine identifier, the departure airport, the arrival airport, and the month of flight departure, at block 400I. If still no record is found in the database storage unit 402, the same procedure can be repeated with the aircraft identifier with any engine, the departure airport, the arrival airport, and the month of flight departure shifted by one month (e.g., +/- one month), at block 400J. If still no record is found in the database storage unit 402, the same procedure can be repeated with the aircraft identifier with any engine, the departure airport, the arrival airport, and the month of flight departure shifted by two months (e.g., +/- two months), at block 400K. If still no record is found in the database storage unit 402, the same procedure can be repeated with any aircraft identifier with any engine, the departure airport, the arrival airport, and the month of flight departure, at block 400L. If still no record is found in the database storage unit 402, the same procedure can be repeated with any aircraft identifier, with any engine, the departure airport, the arrival airport, and the month of flight departure shifted by one month (e.g., +/- one month), at block 400M. If still no record is found in the database storage unit 402, the same procedure can be repeated with any aircraft identifier, with any engine, the departure airport, the arrival airport, and the month of flight departure shifted by two months (e.g., +/- two months), at block 400N. The bootstrapping procedure 114 searches for a record until the record is found in accordance with the above sampling rules.

Therefore, after performing the search in the database storage unit 402, the bootstrapping procedure 114 executes a fly forward frequency based on a requirement, at block 404 to generate a dynamic table, at database 406. The fly forward frequency provides how often the fly forward data is generated. The fly forward data can be generated fortnightly or monthly, etc. depending on the downstream application. The data generated by fly forward is further categorized into Dynamic, Static and Standard. The dynamic set of data is the data for aircrafts having sufficient historical data to execute through fly forward algorithm. The static set of data are the engines which are holding old fly forward data. These engines do not take part in the current fly forward forecast and continue to hold old forecasted data. The standard set aircrafts are the one not having enough historical data and hence assumes placeholder standard data. For example, the bootstrapping procedure 114 use the aircraft sensor parameters 115 (e.g., past data with the status of the engine) together with a forecasted sequence of future routes (e.g., forecasted departure airports, forecasted arrival airports, and time of arrival of the aircraft to the arrival airports) to forecast the status of the engine in the future. The bootstrapping procedure 114 uses the forecasted routes to fetch a relevant record from the history that maps the aircraft route, the aircraft configuration, and the time period of forecast. The results produced are then combined to provide a complete forecast for each aircraft having the future routes and engine sensor parameters forecasted.

Referring back to FIG. 3, performing the bootstrapping procedure 114 thus allows to forecast future aircraft operational data 116, which includes sensor parameters of an aircraft engine based on the aircraft sensor parameters 115 (e.g., engine sensor parameters) and the forecasted sequence of future route structure 110 of the aircraft. The historical engine parameters in the aircraft sensor parameters 115 as well as the forecast future aircraft operational data 116 (e.g., forecast future aircraft engine parameters) can be plotted versus time, as shown in plot 118. The dark circle points represent the historical flight data of the parameters of engines and the open circle points represent the forecast parameter data of engines. As described in the previous paragraphs, the forecast engine parameters are determined using the bootstrapping procedure 114 using the historical flight data. In an embodiment, the period of time from an initial data point to a last data point in the historical data can be, for example, one year, two years, three years, four years, five years, or any other preselected period of time. In an embodiment, the period of time from an initial data point to a last data point in the forecast data can also be the same period as that for the historical data.

The future aircraft operational data 116 (e.g., future engine sensor parameters) of the aircraft can then be used to model the damage progression of the engine, as the engine accumulates cycles. This in turn forecasts the engine removals per customer for shop visits. The scope of this forecast is also extended in lease pool forecasting and engine deterioration modeling. This provides collaborative decision making (CDM) and/or dispatch resource management (DRM), at block 120, to improve aircraft resource management and to predict engine removal prediction, at block 122.

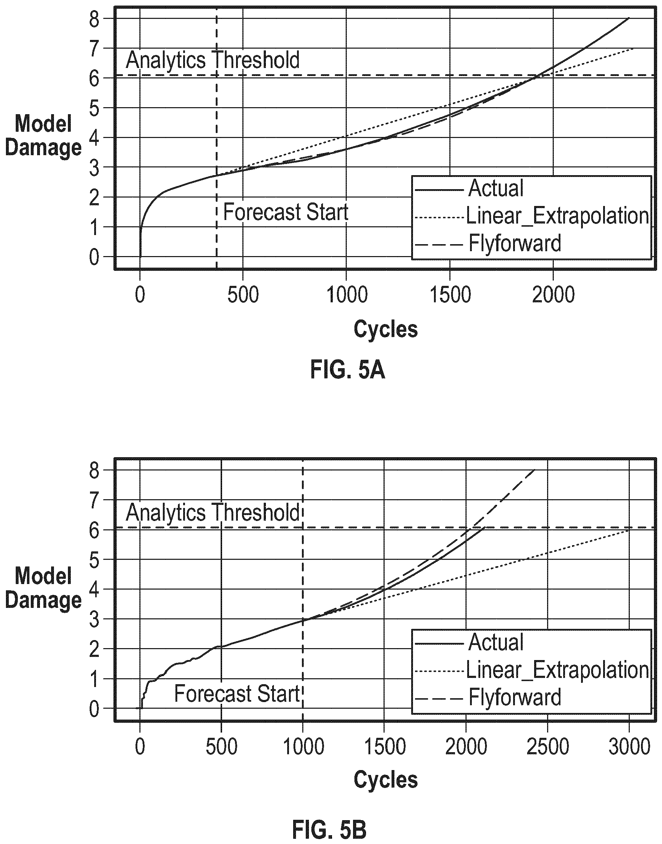

FIG. 5A is a plot of engine model cumulative damage versus number of cycles of a specific engine (e.g., ESN1), according to an embodiment of the present disclosure. The vertical dotted line separates the historical (past) engine model damage with the forecast engine model damage. The vertical line starts at about four hundred cycles meaning that the forecasting is based on four hundred cycles. The horizontal dotted line represents the analytical threshold of engine model damage. The solid line in the plot corresponds to the actual or the real measurement data where both the past or historical data and the "forecast" data are in fact the real measurement data provided for comparison purposes. The dotted line corresponds to a linear extrapolation of the historical data. The dashed line corresponds to the method using a forecasting method applying the Hidden Markov Model and bootstrapping procedure (Fly Forward method) described in the paragraphs above. As shown in FIG. 5A, there is an excellent agreement between the forecast engine model damage obtained using the "Fly Forward" method and the real measurement engine model damage. On the other hand, the forecast engine model damage obtained using the extrapolation method diverges from the real measurement engine model damage.

FIG. 5B is another plot of engine model cumulative damage versus number of cycles of a specific engine (e.g., ESN1), according to an embodiment of the present disclosure. The Y-axis represents the cumulative damage of the specific engine and the X-axis is the number of cycles that the specific engine has seen over a period of time. The specific engine (e.g., ESN1) is selected from a plurality of engines that are used by various aircrafts, as described in the above paragraphs. The vertical dotted line separates the historical (past) engine model damage with the forecast engine model damage. The vertical line starts at about one thousand cycles meaning that the forecasting is based on one thousand cycles. The horizontal dotted line represents the analytical threshold of engine model damage. The solid line in the plot corresponds to the actual or the real measurement data where both the past or the historical data and the "forecast" data are in fact real measurement data provided for comparison purposes. The dotted line corresponds to a linear extrapolation of the historical data. The dashed line corresponds to the method using a forecasting method applying the HMM and bootstrapping procedure (as a whole, the "Fly Forward" method) described in the paragraphs above. As shown in FIG. 5B, there is also an agreement between the forecast engine model damage obtained using the "Fly Forward" method and the real measurement engine model damage. On the other hand, the forecast engine model damage obtained using the extrapolation method diverges from the real measurement engine model damage and the forecast engine model damage obtained using the "Fly Forward." In this case, however, the number of cycles (one thousand cycles) on which the forecast data is based is greater than the number of cycles (four hundred cycles) on which the forecast data is based. As a result, there is a slight divergence between the actual data and the forecast "Fly Forward" data in this case compared to the case shown in FIG. 5A.

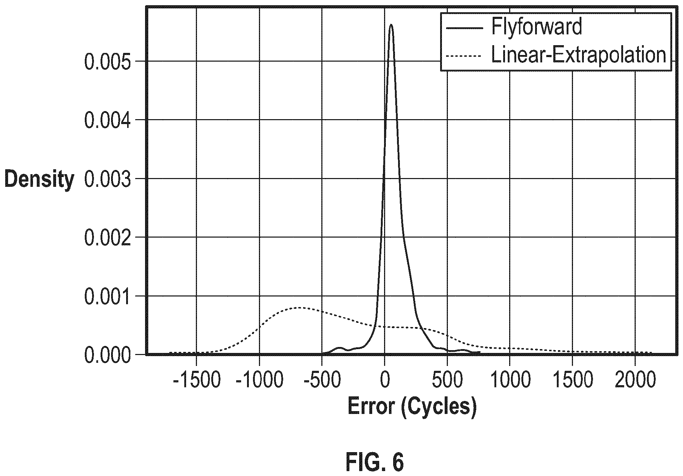

FIG. 6 is a plot of density versus error in cycles, according to an embodiment of the present disclosure. The Y-axis represents the density that is the total number of points seen for many engines. The X-axis represents the error in cycles. The solid curve represents the density for "Fly Forward" method and the dotted line represents the density for the linear-extrapolation method. The error in cycles or the deviation is the difference between the cycles at the analytics threshold for the actual measurement and the "Fly Forward" method for the solid curve. The error in cycles is the difference between the cycles at the analytics threshold for the actual measurement and the linear extrapolation for the dotted curve. This is performed for all the data from all the engines including the data shown in FIGS. 5A or 5B, which represent one specific engine. The solid curve is narrower in error cycles than the dotted curve, indicating that there is a good agreement between the current forecasting "Fly Forward" method and the actual data. On the other hand, there is a widespread error in cycles for the dotted curve showing that there is not a good agreement between the linear extrapolation method the actual data.

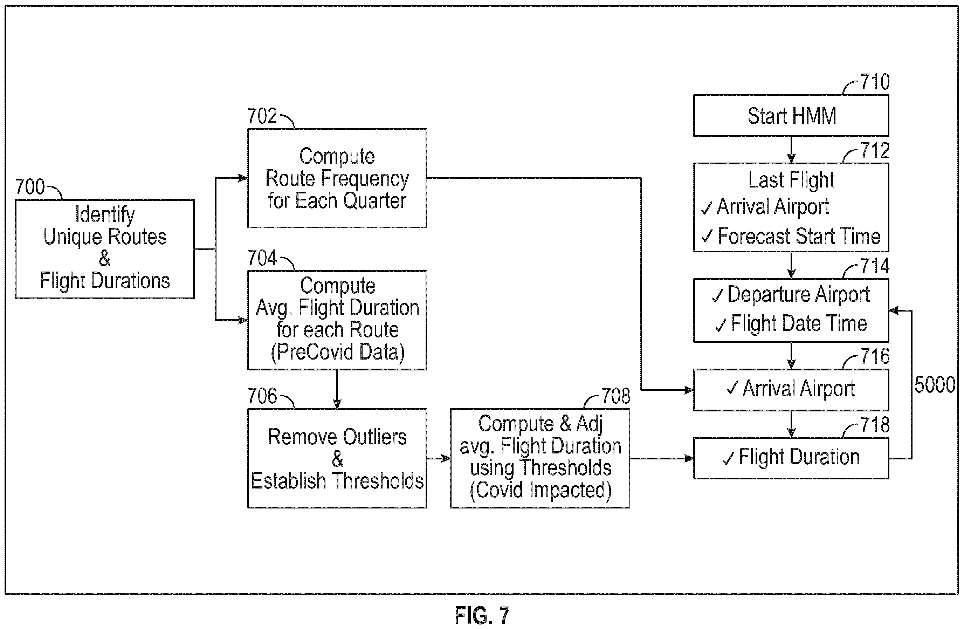

FIG. 7 is a flow chart of a method using the HMM, according to an embodiment of the present disclosure. The method includes identifying unique routes and flight durations, at block 700. The method includes computing the route frequency for each quarter or other selected time period, at block 702. The method also includes computing an average flight duration for each route (before COVID-19), at block 704. The method includes removing outlier data and establishing thresholds, at block 706. The method further includes, after removing the outliers, computing and adjusting average flight duration using the established threshold, at block 708. The method includes starting the HMM model, at block 710 and inputting a last flight arrival airport and forecasting start time, at block 712. To create the future route structure, we need two things the arrival airport and the time of flight. The arrival airport can be found using the transition probability matrices which is explained earlier, the time of flight is estimated using the time it takes on an average for a route historically. Few steps in between like outlier removal and adjusting flight duration using thresholds are mechanisms to make the process robust. The method includes inputting a departure airport and flight time, at block 714. The method includes determining the arrival airport, at block 716, based on the computed route frequency for each quarter, at block 702. The method further includes computing the flight duration, at block 718, based on the computed and adjusted average flight duration using thresholds, at block 708. The computation of flight duration, at block 718, can be repeated a number of times (e.g., 5000) from the departure airport and flight date time, at block 714.

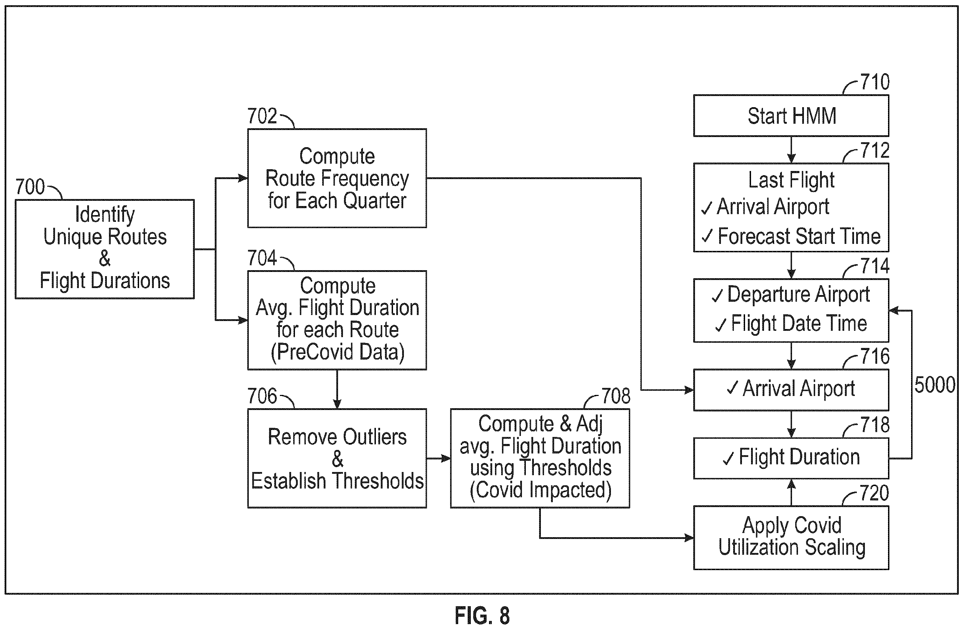

FIG. 8 is a flow chart of another method using the HMM, according to another embodiment of the present disclosure. The flow chart shown in FIG. 8 is similar in many aspects to the flow chart shown in FIG. 7. Therefore, similar steps will not be described further and the same reference numerals refer to the same steps. In this method, however, a utilization scaling is applied to adjust for COVID-19. Therefore, after computing and adjusting the average flight duration using thresholds, the method applies COVID-19 utilization scaling at block 720 prior to determining the flight duration at block 718. Utilization in the fly forward algorithm is capable of being adjusted through external information. Using the market recovery information and behavior of the fleet, each aircraft assumes a certain utilization as seen in the recovery from the pandemic impact. Through external files that contain aircraft level utilization information, number of cycles per month is adjusted in the forecast. This algorithm is capable of handling such exceptional scenarios like COVID-19, fleet down-time and other unforeseen circumstances. Although, the utilization scaling is used herein with respect to the event of COVID-19, the utilization scaling can be used any other situation where data is skewed to take into account external information such as unexpected downtime, or other unforeseen circumstances.

In an embodiment, the use of the route of the aircraft and the period of flight occurrence (e.g., quarterly) to determine transition probability matrices for each quarter or other specific selected period to maintain seasonality of the sensor data per historical ratings of the engine to maintain levels and trends provides a novel approach to produce forecasting data. The forecasting data builds a stochastic forecast based on historical behavior of an aircraft thereby maintaining seasonality and trends. Current methods for forecasting engine data use linear extrapolation where damage progression is linearly extrapolated to forecast the engine removals. However, conventional linear extrapolation methods use the slope of the historical data of the engine to extrapolate the values in the future, which does not capture the non-linearity and the seasonality in the data.

In an embodiment, the algorithm can be modularized to provide flexibility to incorporate the utilization of an aircraft based on any given scenario in addition to normal utilization of an aircraft. For example, COVID-19, unexpected downtime, or any other unforeseen circumstance impact on aircraft utilization can be modeled and considered through multiple techniques like fleet-based recovery curves, geographical region-specific changes, and other dynamic behaviors due to the impact of the pandemic.

The method can be retrained with every single information available until date for every run to produce the forecast. The algorithm uses all the data available until current date, and uses this data as the training data to build the forecast from next date. The algorithm uses a combination of modularized techniques that provides flexibility to incorporate features for future enhancements like component deterioration. The algorithm is validated with other approaches such as linear extrapolation and LSTM neural networks to demonstrate better accuracy in the forecast. The algorithm is scalable to any commercial aviation product-line with minimal changes. Scenario based modeling can be easily incorporated into the algorithm to customize as per various business scenarios.

The forecasted data is used to model the damage progression of an engine for specific failure modes to help with accurate shop visit planning. The "Fly Forward" method described herein demonstrates superior accuracy over the baseline approach, thereby translating to benefits in terms of fleet management and removal prioritization. The forecasted data could be extended for engine lease pool forecasting analytics. This helps to maintain optimum engine lease-pool size for a given product-line and to retire excess engines when necessary. In addition, forecasted data can be used for several applications for maintenance, repair, and overhaul (MRO) shop cost productivity. Accurate engine removal forecasting can translate to improved inventory planning and enable meeting the Turn Around Time (TAT) requirements, thereby preventing penalties. With better inventory available, customer requirements can be met on time. On time delivery will in turn ensure we have improved turn-around time per commitment. In addition, the current described method and system improve forecasting the health of the component and, hence, the module for optimal workscoping.

Although, in the above paragraphs, the forecasting is described as being performed to forecast parameters of an engine, the above "Fly Forward" method can be applied to forecast the status of any component of an aircraft including, but not limited to, a landing gear, a wing, and any other device or mechanism used in an aircraft.

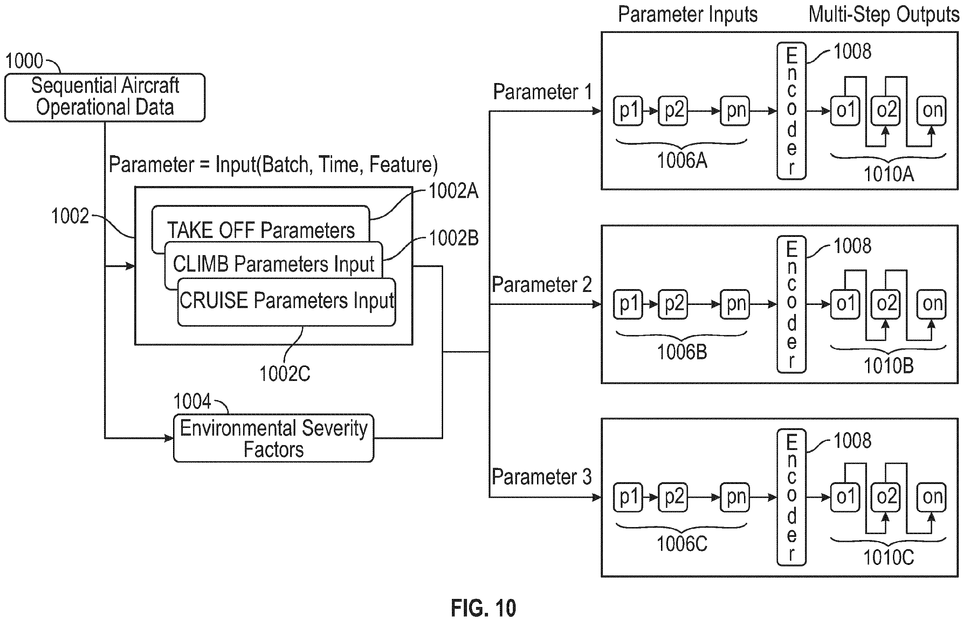

FIG. 10 is a flow diagram of a method of forecasting operation data of an aircraft using a deep learning sequential LSTM procedure, according to another embodiment of the present disclosure. The method includes receiving aircraft operational data 1000. The method includes selecting aircraft sensor parameters 1002 and environmental factors 1004 from the aircraft operational data 1000. The aircraft sensor parameters 1002 may include, but are not limited to, aircraft takeoff parameters 1002A, aircraft climb parameters 1002B, and aircraft cruise parameters 1002C. The aircraft sensor parameters include sensor parameters from one or more components (e.g., one or more engines) of the aircraft. A parameter can be, for example, an input having batch, time and feature variables. The parameters can include historical data of one or more engines used in the aircraft. The parameters are associated with each flight phase of the aircraft. For example, first parameters (p1, p2, . . . , pn) 1006A may be associated with aircraft flight phase one, second parameters (p1, p2, . . . , pn) 1006B may be associated with aircraft flight phase two, and third parameters (p1, p2, . . . , pn) 1006C may be associated with aircraft flight phase three, etc. The method is trained for separate flight phases including using aircraft takeoff parameters 1002A, aircraft climb parameters 1002B, and aircraft cruise parameters 1002C, and with environmental factors 1004 using a sequential LSTM procedure 1008 to provide a multi-output (o1, o2, ... , on) including first multi-output data 1010A, second multi-output data 1010B, and third multi-output data 1010C, for each of the first parameters (p1, p2, ... , pn) 1006A, the second parameters 1006B, and the third parameters 1006C associated with each aircraft flight phase one, aircraft flight phase two, aircraft flight phase three, etc. This enables maintaining a correlation among aircraft flight phases across sensor forecast. The multi-output data 1010A, 1010B, and 1010C are grouped for respective flight record, based on the HMM 108 forecasted route data structure, for example, using the time sequence 112 (shown in FIG. 1) that includes the historical flight data routes and the forecasted flight data routes obtained using the HMM 108. This enables maintaining the correlation between flight phases across the sensor forecast. Therefore, in this method, instead of using the bootstrapping procedure 114 (shown in FIG. 3), the present method uses the sequential LSTM procedure 1008.

The method of forecasting operation data includes based on the multi-output data 1010A, 1010B, and 1010C correlated with the forecasted route data structure, a plurality of forecast aircraft flight sensor parameters from the one or more components (e.g., one or more engines) of the aircraft to prevent failure of the one or more components (e.g., one or more engines) or to replace the one or more components (e.g., one or more engines) of the aircraft prior to failure.

In addition, in another embodiment, the sequential LSTM procedure 1008 can alternatively be used instead of the HMM 108, to forecast the future route structure. Time series-based aircraft operational data is used to learn the departure sequences and to forecast the future route structure pattern using the LSTM procedure 1008.

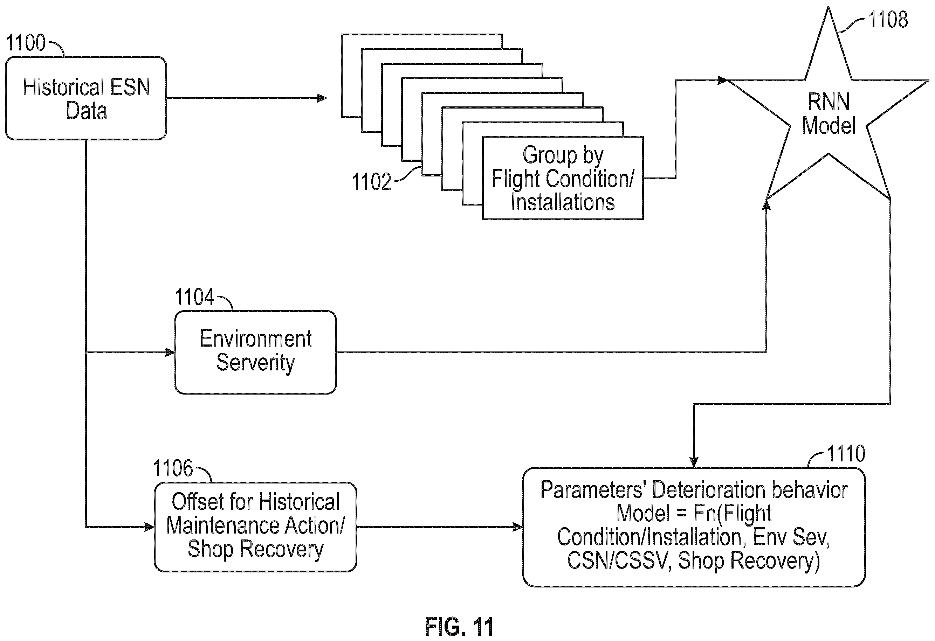

FIG. 11 is a flow diagram of a method of forecasting operation data of an aircraft using deep learning, according to another embodiment of the present disclosure. The method includes receiving aircraft historical data 1100. The aircraft historical data may include equipment serial number (ESN), for example. The method includes grouping aircraft parameters 1102 by flight condition and/or installations. The method further includes receiving environmental factors 1104 from the aircraft historical data 1100. The aircraft parameters 1102 may include, but are not limited to, aircraft takeoff parameters, aircraft climb parameters, and aircraft cruise parameters. The parameters can include historical data of one or more engines used in the aircraft.

The method may also include receiving offset for historical maintenance or shop recovery data 1106 from the aircraft historical data 1100. The term "offset" is used herein to refer to a sudden change in operation parameters in the event of a maintenance action. The method further includes inputting the aircraft parameters 1102 and inputting the environmental factors 1104 to a recurrent neural network (RNN) procedure 1108. The recurrent neural network (RNN) procedure 1108 then outputs parameters deterioration behavior 1110 that are associated with flight condition installation that may take into consideration historical maintenance or shop recovery data 1106.

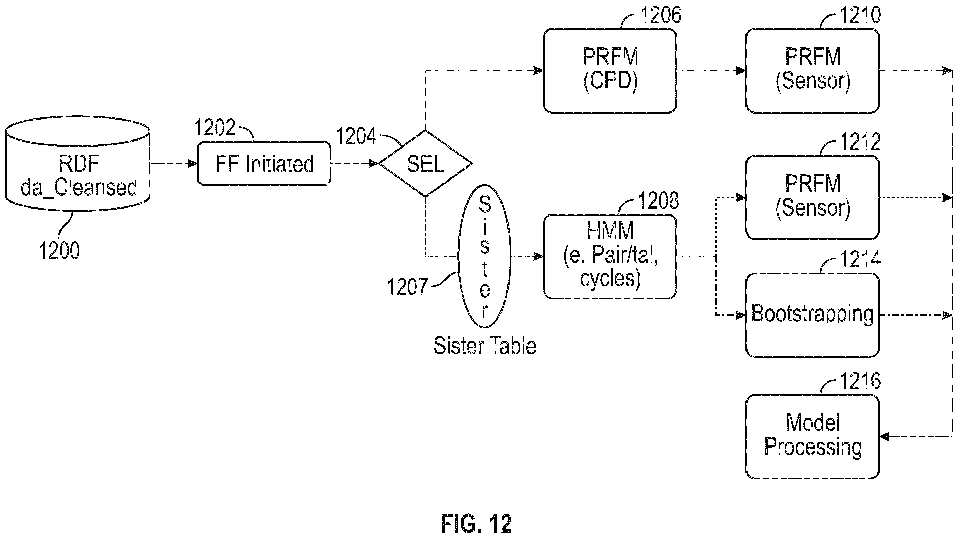

FIG. 12 is a flow diagram of a method of forecasting operation data of an aircraft using a HMM and a Probabilistic Regression Forecast Method (PRFM), according to yet another embodiment of the present disclosure. The method includes receiving Rapid Data Forensic (RDF) flight data 1200. The method includes inputting the RDF flight data 1200 to initiate flight forward (FF) 1202. The method determines if the RDF flight data 1200 is from a single event level (SEL) 1204 and then either performs a Probabilistic Regression Forecast Method (PRFM) on Cycles Per Day (CPD) 1206 or a HMM 1208. Prior to performing the HMM 1208, a sister table 1207 is built based on the RDF flight data 1200. The table is built to identify the current and all previous configurations (Aircraft and ESNs combinations). After performing the Probabilistic Regression Forecast Method (PRFM) on CPD 1206, the Probabilistic Regression Forecast Method (PRFM) is performed on the sensor data 1210. After performing the hidden Markov model 1208, the method either performs the Probabilistic Regression Forecast Method (PRFM) on the sensor data 1212 or performs a bootstrapping procedure 1214. The method then progresses to model processing 1216. The Probabilistic Regression Forecast Method (PRFM) uses the historical data of an engine or the RDF flight data 1200 to generate a set of equation coefficients and ordered residuals for each sensor parameter. The Probabilistic Regression Forecast Method (PRFM) can use an equation with four components, the parameter baseline, deterioration factor, amplitude of seasonal variation, and offset of the seasonal peak.

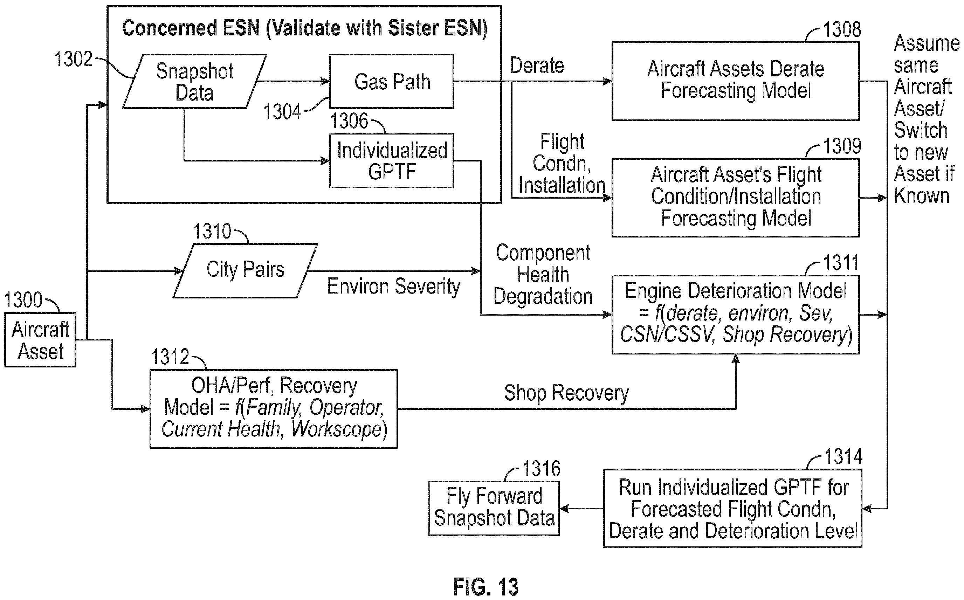

FIG. 13 is a flow diagram of a method of forecasting operation data of an aircraft using a Gas Path Tracking Filter (GPTF), according to another embodiment of the present disclosure. The method includes inputting aircraft historical data 1300 (aircraft asset, etc.). The method includes extracting a snapshot data 1302 from the aircraft historical data 1300 and applying a Gas Path Tracking Filter (GPTF) procedure 1304 or an individualized Gas Path Tracking Filter (GPTF) procedure 1306. In an embodiment, after applying the Gas Path Tracking Filter (GPTF) procedure 1304, the method progresses to derate the aircraft historical data 1300 and to apply a first forecasting model 1308 to forecast flight operations. In an embodiment, after applying the Gas Path Tracking Filter (GPTF) procedure 1304, flight condition installation is applied and a second forecasting model 1309 is applied. In an embodiment, the method includes using aircraft historical data 1300 together with city pairs 1310 (airport departure and airport arrival) to determine component deterioration using an engine deterioration model 1311. In an embodiment, a performance recovery model 1312 can be included as an input in the engine deterioration model 1311. For each forecasted flight condition, derate, and deterioration level, individualized Gas Path Tracking Filter (GPTF) procedure 1314 is implemented to obtain a final forecast or fly forward snapshot data 1316.

Therefore, based on the aircraft historical data 1300, the aircraft's derate, flight condition/installation, degradation and flight operations of the aircraft can be forecasted. This is used to model the engine deterioration as a function of derate, environmental severity based on the city pairs, engine cycles and shop visit information obtained from various sources such as a performance recovery model, or the like. Further, for each forecasted flight condition, derate, and deterioration level, individualized GPTF is run to obtain the final forecast.

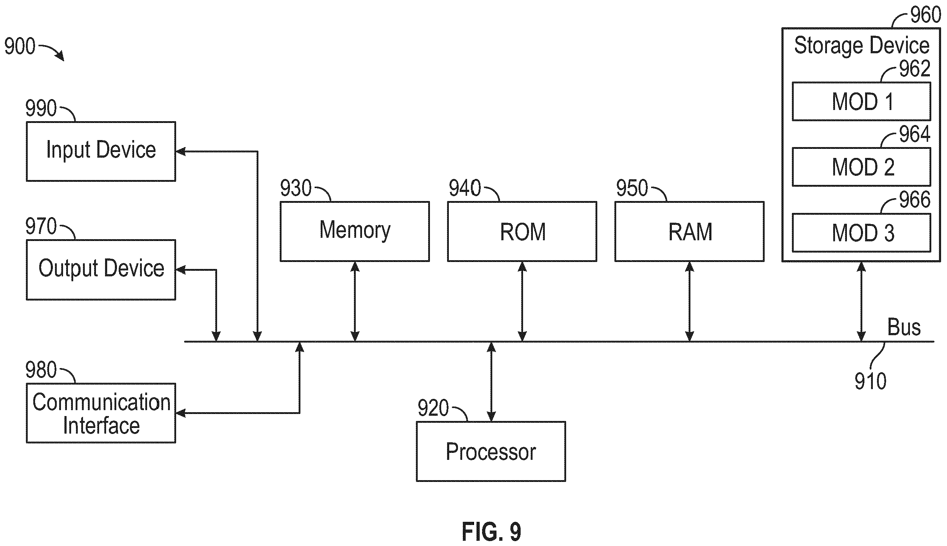

FIG. 9 is a schematic diagram of a computer system 900 for implementing the methods of forecasting operation data of an aircraft, according to an embodiment of the present disclosure. With reference to FIG. 9, an exemplary computer system 900 includes a general-purpose computing device, including a central processing unit (a CPU or a processor) 920 and a system bus 910 that couples various system components including the memory 930 such as a read-only memory (ROM) 940 and random-access memory (RAM) 950 to the processor 920. The computer system 900 can include a cache of high-speed memory connected directly with, in close proximity to, or integrated as part of the processor 920. The computer system 900 copies data from the memory 930 and/or the storage device 960 to the cache for quick access by the processor 920. In this way, the cache provides a performance boost that avoids processor 920 delays while waiting for data. These and other modules can control or be configured to control the processor 920 to perform various actions. Other memory 930 may be available for use as well. The memory 930 can include multiple different types of memory with different performance characteristics. The disclosure may operate on a computer system 900 with more than one processor 920 or on a group or cluster of computing devices networked together to provide greater processing capability. The processor 920 can include any general-purpose processor and a hardware module or a software module, such as first module 962, second module 964, and third module 966 stored in storage device 960, configured to control the processor 920 as well as a special-purpose processor where software instructions are incorporated into the actual processor design. The processor 920 may essentially be a completely self-contained computer system, containing multiple cores or processors, a bus, a memory controller, a cache, etc. A multi-core processor may be symmetric or asymmetric.

The system bus 910 may be any of several types of bus structures including a memory bus or a memory controller, a peripheral bus, and a local bus using any of a variety of bus architectures. A basic input/output (BIOS) stored in memory ROM 940, or the like, may provide the basic routine that helps to transfer information between elements within the computer system 900, such as during start-up. The computer system 900 further includes storage devices 960 such as a hard disk drive, a magnetic disk drive, an optical disk drive, a tape drive, or the like. The storage device 960 can include software modules 962, 964, 966 for controlling the processor 920. Other hardware or software modules are contemplated. The storage device 960 is connected to the system bus 910 by a drive interface. The drives and the associated computer-readable storage media provide nonvolatile storage of computer-readable instructions, data structures, program modules, and other data for the computer system 900. In one aspect, a hardware module that performs a particular function includes the software component stored in a tangible computer-readable storage medium in connection with the necessary hardware components, such as the processor 920, the system bus 910, the output device 970 (e.g., display device), and so forth, to carry out the function. In another aspect, the system can use a processor and a computer-readable storage medium to store instructions that, when executed by a processor (e.g., one or more processors), cause the processor to perform a method or other specific actions. The basic components and appropriate variations are contemplated depending on the type of device, such as whether the computer system 900 is a small, handheld computing device, a desktop computer, or a computer server.

Although the exemplary embodiment described herein employs the storage device 960 such as a hard disk, other types of computer-readable media that can store data that are accessible by a computer, such as magnetic cassettes, flash memory cards, digital versatile disks, cartridges, random access memories (RAMs) 950, and read-only memory (ROM) 940, may also be used in the exemplary operating environment. Tangible computer-readable storage media, computer-readable storage devices, or computer-readable memory devices, expressly exclude media such as transitory waves, energy, carrier signals, electromagnetic waves, and signals per se.

To enable user interaction with the computer system 900, an input device 990 represents any number of input mechanisms, such as a microphone for speech, a touch-sensitive screen for gesture or graphical input, a keyboard, a mouse, motion input, speech, and so forth. An output device 970 can also be one or more of a number of output mechanisms known to those of skill in the art. In some instances, multimodal systems enable a user to provide multiple types of input to communicate with the computer system 900. The communications interface 980 generally governs and manages the user input and system output. There is no restriction on operating on any particular hardware arrangement and, therefore, the basic features here may easily be substituted for improved hardware or firmware arrangements as they are developed.

The technology discussed herein refers to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Further aspects of the present disclosure are provided by the subject matter of the following clauses.

A method of forecasting operation data of an aircraft includes (a) receiving, by a computer system, historical flight data of the aircraft, the historical flight data including historical departure airports, historical arrival airport, and historical period of flight occurrence, (b) calculating, by the computer system, a transition probability matrix based on the historical flight data, (c) determining, by the computer system, based on the transition probability matrix, using a HMM or a sequential LSTM procedure, forecasted departure airports, forecasted arrival airports, and datetime of arrival of the aircraft to the forecast arrival airports to build a forecasted sequence of future routes, (d) receiving, by the computer system, past aircraft sensor parameters, and (e) calculating, by the computer system, using a bootstrapping procedure or the sequential LSTM procedure based on the past aircraft sensor parameters and the forecasted sequence of future routes to forecast future aircraft operational data, (f) determining, by the computer system, based on the forecast future aircraft operational data, a maintenance schedule of one or more systems of the aircraft to repair the one or more systems to prevent failure of the one or more system or to replace the one or more systems prior to failure.

The method of the preceding clause wherein the calculating, by the computer system, the transition probability matrix based on the historical flight data includes calculating the transition probability matrix for a plurality of matrices, each matrix being computed for a selected period of time during a one-year period.

The method of any preceding clause wherein the calculating, by the computer system, the transition probability matrix based on the historical flight data includes computing elements of the transition probability matrix based on elements of a matrix representing a frequency of usage of the historical departure airports of the aircraft.

The method of any preceding clause, further including arranging, by the computer system, the historical flight data of the aircraft and the forecasted sequence of future routes in a time sequence.

The method of any preceding clause, wherein receiving, by the computer system, past aircraft sensor parameters includes receiving past aircraft sensor parameters associated with one or more engines configuration used in the aircraft.

The method of any preceding clause, wherein the calculating, by the computer system, using the bootstrapping procedure based on the past aircraft sensor parameters and the forecasted sequence of future routes to forecast the future aircraft operational data includes applying, by the bootstrapping procedure, sampling rules to the historical flight data.

The method of any preceding clause, wherein the calculating, by the bootstrapping procedure, sampling rules on the historical flight data includes searching, by the computer system, a database storage unit in communication with the computer system for a record having a string of parameters including an identifier of the aircraft, an engine on the aircraft, a departure airport, an arrival airport, and a time of flight departure.

The method of any preceding clause, wherein, when the record having the string of parameters including the identifier of the aircraft, the engine on the aircraft, the departure airport, the arrival airport, and the time of flight departure is found, associating the historical flight data with the record, and forecasting the future aircraft operational data.

The method of any preceding clause, wherein the calculating, by the computer system, using the bootstrapping procedure based on the past aircraft sensor parameters and the forecasted sequence of future routes to forecast future aircraft operational data includes using, by the bootstrapping procedure, forecasted sequence of routes to fetch a relevant record from the historical flight data that maps the aircraft route, aircraft configuration, and a time period of forecast.

The method of any preceding clause, further including plotting the past aircraft sensor parameters and the future aircraft operational data versus time.

The method of any preceding clause, further including receiving, by the computer system, operational flight data of the aircraft that includes a plurality of aircraft flight sensor parameters from one or more components of the aircraft, the plurality of aircraft flight sensor parameters being associated with a plurality of flight phases of the aircraft.

The method of any preceding clause, further including training, by the computer system, the sequential LSTM procedure using the operational flight data for the plurality of flight phases of the aircraft.

The method of any preceding clause, further including outputting, by the computer system, multi-output data for each of the plurality of aircraft flight sensor parameters associated with a corresponding flight phase of the aircraft.

The method of any preceding clause, further including: grouping, by the computer system, the multi-output data for each of the plurality of aircraft flight sensor parameters with a respective flight record based on forecasted route data structure forecasted by the HMM or the sequential LSTM procedure to correlate between the multi-output data with the forecasted route data structure, and determining, by the computer system, based on the multi-output data correlated with the forecasted route data structure, a plurality of forecast aircraft flight sensor parameters from the one or more components of the aircraft to repair the one or more components to prevent failure of the one or more components or to replace the one or more components prior to failure.

A non-transitory computer-readable medium storing a computer-executable code that when executed by a computer system, causes the computer system to perform the method of forecasting operation data of an aircraft according to any preceding clause.

A method of forecasting operation data of an aircraft includes (a) receiving, by a computer system, operational flight data of the aircraft that includes a plurality of aircraft flight sensor parameters from one or more components of the aircraft, the plurality of aircraft flight sensor parameters being associated with a plurality of flight phases of the aircraft, (b) training, by the computer system, a sequential LSTM procedure using the operational flight data for the plurality of flight phases of the aircraft, (c) outputting, by the computer system, multi-output data for each of the plurality of aircraft flight sensor parameters associated with a corresponding flight phase of the aircraft, (d) grouping, by the computer system, the multi-output data for each of the plurality of aircraft flight sensor parameters with a respective flight record based on forecasted route data structure forecasted by a HMM or the sequential LSTM procedure to correlate between the multi-output data with the forecasted route data structure, (e) determining, by the computer system, based on the multi-output data correlated with the forecasted route data structure, a plurality of forecast aircraft flight sensor parameters from the one or more components of the aircraft to prevent failure of the one or more components or to replace the one or more components prior to failure.

The method of the preceding clause, wherein the operational flight data of the aircraft includes aircraft flight parameters and environmental factors.

A non-transitory computer-readable medium storing a computer-executable code that, when executed by a computer system causes the computer system to perform a method of forecasting operation data of an aircraft including (a) receiving, by the computer system, historical flight data of the aircraft, the historical flight data including historical departure airports, historical arrival airport, and historical period of flight occurrence, (b) calculating, by the computer system, a transition probability matrix based on the historical flight data, (c) determining, by the computer system, based on the transition probability matrix, using a HMM or a sequential LSTM procedure, forecasted departure airports, forecasted arrival airports, and time of arrival of the aircraft to the forecast arrival airports to build a forecasted sequence of future routes, (d) receiving, by the computer system, past aircraft sensor parameters, (e) calculating, by the computer system, using a bootstrapping procedure or the sequential LSTM procedure based on the past aircraft sensor parameters and the forecasted sequence of future routes to forecast future aircraft operational data, (f) determining, by the computer system, based on the forecast future aircraft operational data, a maintenance schedule of one or more systems of the aircraft to repair the one or more systems to prevent failure of the one or more system or to replace the one or more systems prior to failure.

The non-transitory computer-readable medium of the preceding clause, wherein the calculating, by the computer system, the transition probability matrix based on the historical flight data includes calculating the transition probability matrix for a plurality of matrices, each matrix being computed for a selected period of time during a one-year period.

The non-transitory computer-readable medium of any preceding clause, wherein the calculating, by the computer system, the transition probability matrix based on the historical flight data includes computing elements of the transition probability matrix based on elements of a matrix representing a frequency of usage of the historical departure airports of the aircraft.

The non-transitory computer-readable medium of any preceding clause, further including arranging, by the computer system, the historical flight data of the aircraft and the forecasted sequence of future routes in a time sequence.

The non-transitory computer-readable medium of any preceding clause, wherein the receiving, by the computer system, past aircraft sensor parameters, includes receiving past aircraft sensor parameters associated with one or more engines configuration used in the aircraft.

The non-transitory computer-readable medium of any preceding clause, wherein the calculating, by the computer system, using the bootstrapping procedure based on the past aircraft sensor parameters and the forecasted sequence of future routes to forecast the future aircraft operational data includes applying, by the bootstrapping procedure, sampling rules to the historical flight data.

The non-transitory computer-readable medium of any preceding clause, wherein the applying, by the bootstrapping procedure, sampling rules on the historical flight data includes searching, by the computer system, a database storage unit in communication with the computer system for a record having a string of parameters including an identifier of the aircraft, an engine on the aircraft, a departure airport, an arrival airport, and a time of flight departure.

The non-transitory computer-readable medium of any preceding clause, wherein, when the record having the string of parameters including the identifier of the aircraft, the engine on the aircraft, the departure airport, the arrival airport, and the time of flight departure is found, associating the historical flight data with the record and forecasting the future aircraft operational data.

The non-transitory computer-readable medium of any preceding clause, wherein the calculating, by the computer system, using the bootstrapping procedure based on the past aircraft sensor parameters and the forecasted sequence of future routes to forecast future aircraft operational data includes using, by the bootstrapping procedure, forecasted sequence of routes to fetch a relevant record from the historical flight data that maps the aircraft route, aircraft configuration, and a time period of forecast.

The non-transitory computer-readable medium of any preceding clause, further including plotting the past aircraft sensor parameters and the future aircraft operational data versus time.

A method of forecasting operation data of an aircraft includes (a) receiving aircraft historical data, (b) grouping aircraft parameters by flight condition and/or installations, (c) receiving environmental factors from the aircraft historical data, (d) receiving offset for historical maintenance or shop recovery data from the aircraft historical data, (e) inputting the aircraft parameters and inputting the environmental factors to a recurrent neural network (RNN) procedure, (f) outputting by the recurrent neural network procedure parameters deterioration behavior that are associated with flight condition installation and taking into consideration historical maintenance or shop recovery data.

The method of the preceding clause, wherein the aircraft parameters include aircraft takeoff parameters, aircraft climb parameters, and aircraft cruise parameters.

A method of forecasting operation data of an aircraft includes using a hidden Markov model (HMM) and a Probabilistic Regression Forecast Method (PRFM), the method comprising (a) receiving Rapid Data Forensic (RDF) flight data, (b) inputting the RDF data to initiate flight forward (FF), (c) determining if the RDF data is from a single event level (SEL), (d) performing either a Probabilistic Regression Forecast Method (PRFM) on Cycles Per Day (CPD) or a hidden Markov model (HMM), (e) after performing the Probabilistic Regression Forecast Method (PRFM) on CPD 1206, performing the Probabilistic Regression Forecast Method (PRFM) on sensor data, performing a bootstrapping procedure on a result of the hidden Markov model (HMM), and model processing 1216, wherein the Probabilistic Regression Forecast Method (PRFM) uses the historical data of an engine or the RDF data to generate a set of equation coefficients and ordered residuals for each sensor parameter.

The method of the preceding clause, wherein prior to performing the hidden Markov model (HMM), generating a sister table based on the RDF data to identify current and all previous aircraft configurations.

The method of any preceding clause, wherein the Probabilistic Regression Forecast Method (PRFM) uses an equation with four components, a parameter baseline, deterioration factor, amplitude of seasonal variation, and offset of the seasonal peak.

A method of forecasting operation data of an aircraft includes using a Gas Path Tracking Filter (GPTF), according to another embodiment of the present disclosure, the method including (a) inputting aircraft historical data, (b) extracting a snapshot data from the aircraft historical data, (c) applying a Gas Path Tracking Filter (GPTF) procedure or an individualized Gas Path Tracking Filter (GPTF) procedure, (d) derating the aircraft historical data, and (e) applying a first forecasting model to forecast flight operations.

The method of the preceding clause wherein, after applying the Gas Path Tracking Filter (GPTF) procedure, applying flight condition installation and applying a second forecasting model.

The method of any preceding clause, the method further including using aircraft historical data together with city pairs including airport departure and airport arrival to determine component deterioration using an engine deterioration model.

The method of any preceding clause, the method further inputting a performance recovery model in the engine deterioration model.

The method of any preceding clause, the method further including for each forecasted flight condition, derate, and deterioration level, implementing individualized Gas Path Tracking Filter (GPTF) procedure to obtain a final forecast or fly forward snapshot data.

A method of forecasting operation data of an aircraft, the method comprising: receiving, by a computer system, historical flight data of the aircraft, the historical flight data including historical departure airports, historical arrival airports, and historical period of flight occurrence; calculating, by the computer system, a transition probability matrix based on the historical flight data; determining, by the computer system, based on the transition probability matrix, using a hidden Markov model (HMM) or a sequential Long Short Term Memory (LSTM) procedure, forecasted departure airports, forecasted arrival airports, and time of arrival of the aircraft to the forecasted arrival airports to build a forecasted sequence of future routes; receiving, by the computer system, past aircraft sensor parameters; calculating, by the computer system, using a bootstrapping procedure or the sequential LSTM procedure based on the past aircraft sensor parameters and the forecasted sequence of future routes, forecast future aircraft operational data; and determining, by the computer system, based on the forecast future aircraft operational data, a maintenance schedule of one or more systems of the aircraft to repair the one or more systems to prevent failure of the one or more systems or to replace the one or more systems prior to failure.

The method of any preceding clause, wherein the calculating, by the computer system, the transition probability matrix based on the historical flight data comprises calculating the transition probability matrix for a plurality of matrices, each matrix being computed for a selected period of time during a one-year period.

The method of any preceding clause, wherein the calculating, by the computer system, the transition probability matrix based on the historical flight data comprises computing elements of the transition probability matrix based on elements of a matrix representing a frequency of usage of the historical departure airports of the aircraft.

The method of any preceding clause, further comprising arranging, by the computer system, the historical flight data of the aircraft and the forecasted sequence of future routes in a time sequence.

The method of any preceding clause, wherein the receiving, by the computer system, the past aircraft sensor parameters comprises receiving past aircraft sensor parameters associated with one or more engines configuration used in the aircraft.

The method of any preceding clause, wherein the calculating, by the computer system, using the bootstrapping procedure based on the past aircraft sensor parameters and the forecasted sequence of future routes to forecast the future aircraft operational data comprises using, by the bootstrapping procedure, forecasted sequence of routes to fetch a relevant record from the historical flight data that maps aircraft route, aircraft configuration and a time period of forecast.

The method of any preceding clause, further comprising plotting the past aircraft sensor parameters and the future aircraft operational data versus time.

The method of any preceding clause, wherein calculating, by the computer system, using the bootstrapping procedure based on the past aircraft sensor parameters and the forecasted sequence of future routes to forecast the future aircraft operational data comprises applying, by the bootstrapping procedure, sampling rules to the historical flight data.

The method of any preceding clause, wherein the calculating, using the bootstrapping procedure, sampling rules on the historical flight data comprises searching, by the computer system, a database storage unit in communication with the computer system for a record having a string of parameters including an identifier of the aircraft, an engine on the aircraft, a departure airport, an arrival airport, and a time of flight departure.

The method of any preceding clause, wherein, when the record having the string of parameters including the identifier of the aircraft, the engine on the aircraft, the departure airport, the arrival airport, and the time of flight departure is found, further comprising associating the historical flight data with the record and forecasting the future aircraft operational data.

A method of forecasting operation data of an aircraft, the method comprising: receiving, by a computer system, operational flight data of the aircraft that includes a plurality of aircraft flight sensor parameters from one or more components of the aircraft, the plurality of aircraft flight sensor parameters being associated with a plurality of flight phases of the aircraft; training, by the computer system, a sequential Long Short Term Memory (LSTM) procedure using the operational flight data for the plurality of flight phases of the aircraft; outputting, by the computer system, multi-output data for each of the plurality of aircraft flight sensor parameters associated with a corresponding flight phase of the aircraft; grouping, by the computer system, the multi-output data for each of the plurality of aircraft flight sensor parameters with a respective flight record based on forecasted route data structure forecasted by a Hidden Markov Model (HMM) or the sequential LSTM procedure to correlate between the multi-output data with the forecasted route data structure; and determining, by the computer system, based on the multi-output data correlated with the forecasted route data structure, a plurality of forecast aircraft flight sensor parameters from the one or more components of the aircraft to repair the one or more components to prevent failure of the one or more components or to replace the one or more components prior to failure.

The method according to any preceding clause, wherein the operational flight data of the aircraft comprises aircraft flight parameters and environmental factors.

A non-transitory computer-readable medium storing a computer-executable code that when executed by a computer system, causes the computer system to perform a method of forecasting operation data of an aircraft, the method comprising: receiving, by the computer system, historical flight data of the aircraft, the historical flight data including historical departure airports, historical arrival airport, and historical period of flight occurrence; calculating, by the computer system, a transition probability matrix based on the historical flight data; determining, by the computer system, using the transition probability matrix, forecasted departure airports, forecasted arrival airports, and time of arrival of the aircraft to the forecasted arrival airports to build a forecasted sequence of future routes; receiving, by the computer system, past aircraft sensor parameters; calculating, by the computer system, using a bootstrapping procedure based on the past aircraft sensor parameters and the forecasted sequence of future routes, forecast future aircraft operational data; and determining, by the computer system, based on the forecast future aircraft operational data, a maintenance schedule of one or more systems of the aircraft to repair the one or more systems to prevent failure of the one or more systems or to replace the one or more systems prior to failure.

The non-transitory computer-readable medium of any preceding clause, wherein the calculating, by the computer system, the transition probability matrix based on the historical flight data comprises calculating the transition probability matrix for a plurality of matrices, each matrix being computed for a selected period of time during a one-year period.

The non-transitory computer-readable medium of any preceding clause, wherein the calculating, by the computer system, the transition probability matrix based on the historical flight data comprises computing elements of the transition probability matrix based on elements of a matrix representing a frequency of usage of the historical departure airports of the aircraft.

The non-transitory computer-readable medium of any preceding clause, further comprising arranging, by the computer system, the historical flight data of the aircraft and the forecasted sequence of future routes in a time sequence.

The non-transitory computer-readable medium of any preceding clause, wherein the receiving, by the computer system, the past aircraft sensor parameters comprises receiving past aircraft sensor parameters associated with one or more engines configuration used in the aircraft.

The non-transitory computer-readable medium of any preceding clause, wherein the calculating, by the computer system, using the bootstrapping procedure based on the past aircraft sensor parameters and the forecasted sequence of future routes to forecast the future aircraft operational data comprises applying, by the bootstrapping procedure, sampling rules to the historical flight data.

The non-transitory computer-readable medium of any preceding clause, wherein the applying, by the bootstrapping procedure, sampling rules on the historical flight data comprises searching, by the computer system, a database storage unit in communication with the computer system for a record having a string of parameters including an identifier of the aircraft, an engine on the aircraft, a departure airport, an arrival airport, and a time of flight departure.

The non-transitory computer-readable medium of any preceding clause, wherein, when the record having the string of parameters including the identifier of the aircraft, the engine on the aircraft, the departure airport, the arrival airport, and the time of flight departure is found, further comprising associating the historical flight data with the record and forecasting the future aircraft operational data.

Although the foregoing description is directed to the preferred embodiments of the present disclosure, other variations and modifications will be apparent to those skilled in the art, and may be made without departing from the spirit or the scope of the disclosure. Moreover, features described in connection with one embodiment of the present disclosure may be used in conjunction with other embodiments, even if not explicitly stated above.

## Claims

1. A method of forecasting operation data of an aircraft, the method comprising:
receiving, by a computer system, historical flight data (104) of the aircraft, the historical flight data (104) including historical departure airports, historical arrival airport, and historical period of flight occurrence;
calculating, by the computer system, a transition probability matrix (106) based on the historical flight data (104);
determining, by the computer system, based on the transition probability matrix (106), using a hidden Markov model (HMM) (108) or a sequential Long Short Term Memory (LSTM) (1008) procedure, forecasted departure airports, forecasted arrival airports, and time of arrival of the aircraft to the forecast arrival airports to build a forecasted sequence of future routes (110);
receiving, by the computer system, past aircraft sensor parameters (115);
calculating, by the computer system, using a bootstrapping procedure (114) or the sequential Long Short Term Memory (LSTM) (1008) procedure based on the past aircraft sensor parameters (115) and the forecasted sequence of future routes (110), forecast future aircraft operational data (116); and
determining, by the computer system, based on the forecast future aircraft operational data (116), a maintenance schedule of one or more systems of the aircraft to repair the one or more systems to prevent failure of the one or more system or to replace the one or more systems prior to failure.

2. The method of claim 1, wherein the calculating, by the computer system, the transition probability matrix (106) based on the historical flight data (104) comprises calculating the transition probability matrix (106) for a plurality of matrices, each matrix being computed for a selected period of time during a one-year period.

3. The method of any preceding claim, wherein the calculating, by the computer system, the transition probability matrix (106) based on the historical flight data (104) comprises computing elements of the transition probability matrix (106) based on elements of a matrix representing a frequency of usage of the historical departure airports of the aircraft.

4. The method of any preceding claim, further comprising arranging, by the computer system, the historical flight data (104) of the aircraft and the forecasted sequence of future routes (110) in a time sequence.

5. The method of any preceding claim, wherein the receiving, by the computer system, past aircraft sensor parameters (115), comprises receiving past aircraft sensor parameters (115) associated with one or more engines configuration used in the aircraft.

6. The method of any preceding claim, wherein the calculating, by the computer system, using the bootstrapping procedure (114) based on the past aircraft sensor parameters (115) and the forecasted sequence of future routes (110) to forecast future aircraft operational data comprises using, by the bootstrapping procedure (114), forecasted sequence of routes (110) to fetch a relevant record from the historical flight data (104) that maps aircraft route, aircraft configuration and a time period of forecast.

7. The method of any preceding claim, further comprising plotting the past aircraft sensor parameters (115) and the future aircraft operational data (116) versus time.

8. The method of any preceding claim, wherein calculating, by the computer system, using the bootstrapping procedure (114) based on the past aircraft sensor parameters (115) and the forecasted sequence of future routes (110) to forecast the future aircraft operational data (116) comprises applying, by the bootstrapping procedure (114), sampling rules (401) to the historical flight data (104).

9. The method of any preceding claim, wherein the calculating, using the bootstrapping procedure (114), sampling rules (401) on the historical flight data (104) comprises searching, by the computer system, a database storage unit (402) in communication with the computer system for a record having a string of parameters including an identifier of the aircraft, an engine on the aircraft, a departure airport, an arrival airport, and a time of flight departure.

10. The method of claim 9, wherein, when the record having the string of parameters including the identifier of the aircraft, the engine on the aircraft, the departure airport, the arrival airport, and the time of flight departure is found, further comprising associating the historical flight data (104) with the record and forecasting the future aircraft operational data.

11. The method of any preceding claim, further comprising receiving, by the computer system, operational flight data (1000) of the aircraft that includes a plurality of aircraft flight sensor parameters (1002) from one or more components of the aircraft, the plurality of aircraft flight sensor parameters (1002) being associated with a plurality of flight phases of the aircraft.

12. The method of claim 11, further comprising training, by the computer system, the sequential Long Short Term Memory (LSTM) procedure (1008) using the operational flight data (1000) for the plurality of flight phases of the aircraft.

13. The method of claim 12, further comprising outputting, by the computer system, multi-output data (1006A, 1006B, 1006C) for each of the plurality of aircraft flight sensor parameters (1002) associated with a corresponding flight phase of the aircraft.

14. The method of claim 13, further comprising:
grouping, by the computer system, the multi-output data (1006A, 1006B, 1006C) for each of the plurality of aircraft flight sensor parameters (1002) with a respective flight record based on forecasted route data structure forecasted by the Hidden Markov Model (HMM) (108) or the sequential Long Short Term (LSTM) procedure (1008) to correlate between the multi-output data (1006A, 1006B, 1006C) with the forecasted route data structure; and
determining, by the computer system, based on the multi-output data (1006A, 1006B, 1006C) correlated with the forecasted route data structure, a plurality of forecast aircraft flight sensor parameters from the one or more components of the aircraft to repair the one or more components to prevent failure of the one or more components or to replace the one or more components prior to failure.

15. A non-transitory computer-readable medium storing a computer-executable code that when executed by a computer system, causes the computer system to perform the method of forecasting operation data of an aircraft according to any one of claims 1 to 14.
